# EUROPÄISCHE PATENTANMELDUNG

(11) **EP 0 756 100 A1**
(43) Veröffentlichungstag der Anmeldung: **29.01.1997**
(21) Anmeldenummer: 95111822.3
(22) Anmeldetag: 27.07.1995
(51) Int. Cl.: F16D 65/092, F16D 69/04, B32B 7/08, B21D 39/03

(54) **Bremsbelagträger, insbesondere für Nutzfahrzeug-Scheibenbremsen**

(71) Anmelder: KNORR-BREMSE SYSTEME FÜR NUTZFAHRZEUGE GmbH, 80809 München (DE)
(72) Erfinder: Kühne, Victor, D-86720 Nördlingen (DE); Bieker, Dieter, D-83080 Oberaudorf (DE); Baumgartner, Hans, D-85368 Moosburg (DE)
(74) Vertreter: Specht, Peter, Dipl.Phys.

(57) **Zusammenfassung**

Ein Bremsbelagträger, insbesondere für Nutzfahrzeug-Scheibenbremsen, wird derart aus zwei Einzelblechen (1, 3) gefügt, daß seine Biegesteifigkeit größer ist als die Summe der Einzelsteifigkeiten der Einzelbleche (1, 3). Die Abstützflächen der Einzelbleche (1, 3) bilden ferner eine Gesamtfläche, die einen Traganteil aufweist, der höher als der eines entsprechenden Einzelblechträgers ist.

## Beschreibung

Die Erfindung betrifft einen Bremsbelagträger, insbesondere für Nutzfahrzeug-Scheibenbremsen, und ein Verfahren zu dessen Herstellung.

Bremsbelagträger bilden in Verbindung mit einem darauf befestigten Bremsbelag eine Bremsbacke. Während einer Bremsung wird bei Scheibenbremsen (insbesondere nach Art der DE 42 30 005, auf die vollumfänglich verwiesen wird) über den Bremsbelagträger und den darauf befestigten Bremsbelag Zuspannkraft weitergeleitet, aus welcher die Bremskraft zwischen Bremsbelag und Bremsscheibe resultiert. Insbesondere im Nutzfahrzeugbereich sind an Bremsbacken bzw. deren Belagträger enorm hohe Festigkeitsanfordungen zu stellen, denn infolge der hohen Nutzfahrzeugmassen treten bei Bremsvorgängen entsprechend hohe Bremskräffe auf. Grundanforderung an einen auch für den Nutzfahrzeugbereich geeigneten Bremsbelagträger ist insbesondere eine hohe (in der Senkrechte zur Belagträgerebene wirksame) Biegesteifigkeit zum Schutz gegen Bruch und/oder Verformung. Infolge des Abstützens der Stirnseite des Bremsbelagträgers am Bremsträger (Abstützkräfte bis zu 10 t) ist ferner auch im Bereich der Stirnseiten der Bremsbeläge eine hohe Festigkeit von entscheidender Bedeutung.

Die Erfindung zielt daher darauf ab, einen Bremsbelagträger zu schaffen, der auch höchsten Belastungen im Nutzfahrzeugbereich sicher gewachsen ist.

Die Erfindung erreicht dieses Ziel durch den Gegenstand des Anpruches 1. Eine Grundidee der Erfindung besteht danach in der Aufteilung des Belagträgers in (möglichst wenige) fest zusammengefugte Einzelbleche. Dabei liegt der Schwerpunkt auf dem "Fügen" der Einzelbleche, denn die Erfindung hat nichts mit den - aus dem Stand der Technik bekannten - geräuschdämmenden Mehrschichträgern (zum Einsatz im PKW-Bereich) zu tun (siehe hierzu z.B. die DE 26 40 824, die DE 34 02 866, die DE 27 15 757 oder die DE 24 51 392 C2). Die aus diesen Schriften bekannten Bremsbelagträger setzen im Gegensatz zur Erfindung die Biegesteifigkeit eher herab, da die Summe der Einzelsteifigkeiten der Bleche (infolge der eine Federwirkung gewährleistenden Verbindungen zwischen den Einzelblechen) kleiner ist als die Steifigkeit eines entsprechend dimensionierten Massivbleches. In der DE 26 40 824 wird dazu ausgeführt, daß die Verbindung der Lamellenbleche derart erfolgen muß, daß die Federwirkung des Lamellenpaketes erhalten bleibt. Würde die Federwirkung nicht realisiert, verlöre der Bremsbelag seine Federeigenschaften und damit auch die geräuschdämmende Wirkung. Ganz wesentlich ist also bei den Lamellenbelagträgern, daß durch sie die Festigkeit des Belagträgers zur Erzielung einer Geräuschdämmung eher herabgesetzt wird. Im PKW-Bereich ist der Einsatz derartiger Belagträger zwar theoretisch denkbar; im Bereich der Nutzfahrzeug-Bremstechnik ist der Einsatz der "Lamellenpaket-Belagträger" dagegen nicht geeignet, denn die Festigkeit derartiger Belagträger genügt nicht den vorstehend beschriebenen, hohen Festigkeitsanforderungen.

Hier geht die Erfindung einen anderen Weg, denn im Gegensatz zu Mehrlamellen-Bremsbelagträgern versucht sie eher die Eigenschaften des Einzelschichträgers zu übernehmen und zu verbessern, der nach dem Stand der Technik auch aufgrund fertigungstechnischer Vorbehalte nicht so dimensioniert wurde, wie es die hohen bei Nutzfahrzeugscheibenbremsen auftretenden Kräfte eigentlich erfordern. Verfahrenstechnisch sind z.B. Stahlblechteile von hoher Festigkeit und einer Dicke der Größenordnung 10 mm äußerst schwierig realisierbar, denn ein (für die kostengünstige Massenproduktion notwendiges) Stanzen von derartigen Stahlblechen ist in einer wirtschaftlich sinnvollen Weise praktisch nicht möglich.

Ein besonderer Vorteil der Erfindung ist demnach darin zu sehen, daß es mit ihr endlich auch verfahrenstechnisch realisierbar wird, in den im Grunde im Nutzfahrzeugbereich notwendigen Bereiche einer Biegesteifigkeit vorzustoßen, die Materialfestigkeiten von über 700 N/mm² erfordert: dazu unterteilt die Erfindung den Belag zwar in möglichst wenige (insbesondere zwei) Einzelbleche, fügt diese aber derart fest zusammen, daß die Mehrschichtigkeit keine Dämpfungswirkung sondern eine Festigkeitserhöhung hervorruft. Auf diese Weise ist die Stärke des Belagträgers durch die Erfindung deutlich erhöhbar (z.B. von 5 auf 10 mm), was bzgl. maximaler Biegesteifigkeiten und Festigkeiten im Nutzfahrzeugbereich neue Maßstäbe setzt.

Zur Verdeutlichung des Unterschiedes zwischen Mehrlamellen-Belagtträgern und der vorliegenden Erfindung sei ferner hervorgehoben, daß ausgehend von den Mehrlamellen-Belagträgern die Entwicklung im PKW-Bereich eher in Richtung eines Mehrlamellenpaketes mit zwischenliegenden nichtmetallischen Dämmschichten oder zu einer zusätzlichen Dämmplatte mit Verschiebemöglichkeit gegangen ist (siehe z.B. die GB 1 586 465). Bei einer besonders vorteilhaften Weiterbildung der Erfindung sind dagegen die Einzelbleche verschiebesicher derart zusammengefügt, daß während einer Bremsung keine Relativbewegung zwischen ihnen möglich ist, was zu einer maximalen Biegesteifigkeit führt, die eine optimale Richtwirkung ergibt. Richtwirkung heißt: "gleichmäßige Druckverteilung zwischen Belag und Bremsscheibe". Insbesondere läßt sich auf diese Weise auch unkompliziert eine Art "Quasikompaktelement" realisieren.

Bei einer weiteren bevorzugten Variante der Erfindung bilden die Abstützflächen der Einzelbleche eine Gesamtfläche, die einen Traganteil aufweist, der deutlich höher als der eines entsprechenden Einzelblechträgers ist. Ein besonderer Vorteil dieser Variante der Erfindung ist in der besonders hohen, gegenüber dem Stand der Technik stark verbesserten, gleichmäßigen spezifischen Flächenbelastung zu sehen.

Die nach einer weiteren Variante der Erfindung vorgesehene Wahl der Einzelbleche aus hochfestem Material, insbesondere Stahlblech, dient neben der weiteren Erhöhung der Richtwirkung durch geringe Verschiebekräfte zur Herabsetzung des Verschleisses zwischen Belagträgerblech und Bremsträger. Bei einem zweischichtigen Träger lassen sich z.B. Festigkeiten von mehr als 700 N/mm² wirtschaftlich realisieren.

Weitere besonders vorteilhafte Weiterbildungen der Erfindung zeichnen sich dadurch aus, daß eines der Einzelbleche jeweils mit Ausprägungen (aus denen entsprechende Vorsprünge auf dem Blech resultieren) und das jeweils andere Einzelblech mit entsprechenden Vertiefungen zur Aufnahme der Vorsprünge versehen ist. Diese Variante ermöglicht eine fertigungstechnisch besonders unkomplizierte Möglichkeit zur Realisierung der Erfindung, denn die vorstehend beschriebenen Einzelbleche lassen sich durch einen Preßvorgang fest zusammenfügen, insbesondere auch derart, daß die Vorsprünge mit Nietwirkung in die entsprechenden Vertiefungen des anderen Einzelbleches eingreifen. Auf diese Weise wird eine verschiebesichere Verbindung der beiden Einzelbleche erreicht, ohne daß komplizierte und teuere Klebe- oder Schweißvorgänge notwendig sind. Besonders vorteilhaft ist es ferner, wenn der Bremsbelag zur Abschersicherung in die Vertiefungen eingreift.

Eine weitere vorteilhafte Variante der Erfindung wird dadurch realisiert, daß die Abstützkanten der Belagträgerbleche (insbesondere infolge eines Kaltverfestigungsvorganges) eine höhere Festigkeit aufweisen als das Grundmaterial der Einzelbleche. Auch diese Maßnahme dient der Minimierung der Reibung und des Verschleisses zwischen Belagträgerblech und Belagträger.

Eine weitere vorteilhafte Variante der Erfindung wird dadurch erreicht, daß die Einzelbleche derart zusammengefügt sind, daß ihre Walzrichtungen einander kompensieren, was eine maximale Ebenheit auch bei hoher thermischer Belastung sichert.

Schließlich ergibt sich durch eine weitere besonders bevorzugte Variante der Erfindung, bei der die Einzelbleche eine unterschiedliche Außenkontur (Außenradius) und/oder eine unterschiedliche Flächenkontur, insbesondere unterschiedliche Ausprägungen und Vertiefungen, aufweisen, der große Vorteil, daß sich durch die Einzelbleche kostengünstig verschiedenene Zusatzfunktionen (wie unkomplizierte Einbindung der Belag-Verschleißüberwachung, Anbringen einer Dämpfungsfeder usw.) realisieren lassen.

Nachfolgend wird die Erfindung unter Bezug auf die Zeichnung anhand mehrerer Ausführungsbeispiele näher beschrieben, wobei auch weitere Vorteile der Erfindung deutlich werden. Es zeigt:
- Fig. 1a und 1b: eine Draufsicht auf ein kolbenseitiges und ein belagseitiges Einzelblech nach einem ersten Ausführungsbeispiel der Erfindung;
- Fig. 2a und 2b: eine Schnittansicht der Einzelbleche aus Fig. 1a und 1b;
- Fig. 3: eine aus den Blechen der Fig. 1 und 2 zusammengefügte Belagträgerplatte mit einem angeformten Bremsbelag;
- Fig. 4: eine Ausschnittsvergrößerung aus Fig. 3;
- Fig. 5a und 5b: eine Draufsicht auf ein kolbenseitiges und ein belagseitiges Einzelblech nach einem weiteren Ausführungsbeispiel der Erfindung;
- Fig. 6a und 6b: eine Schnittansicht (A-A; C-C) der Einzelbleche aus Fig. 5a und 5b;
- Fig. 7: eine Draufsicht auf einen zusammengefügten Belagträger entsprechend Fig. 5 und 6;
- Fig. 8: eine Schnittansicht (B-B) aus Fig. 7;
- Fig. 9: eine Ausschnittsvergrößerung aus Fig. 7.

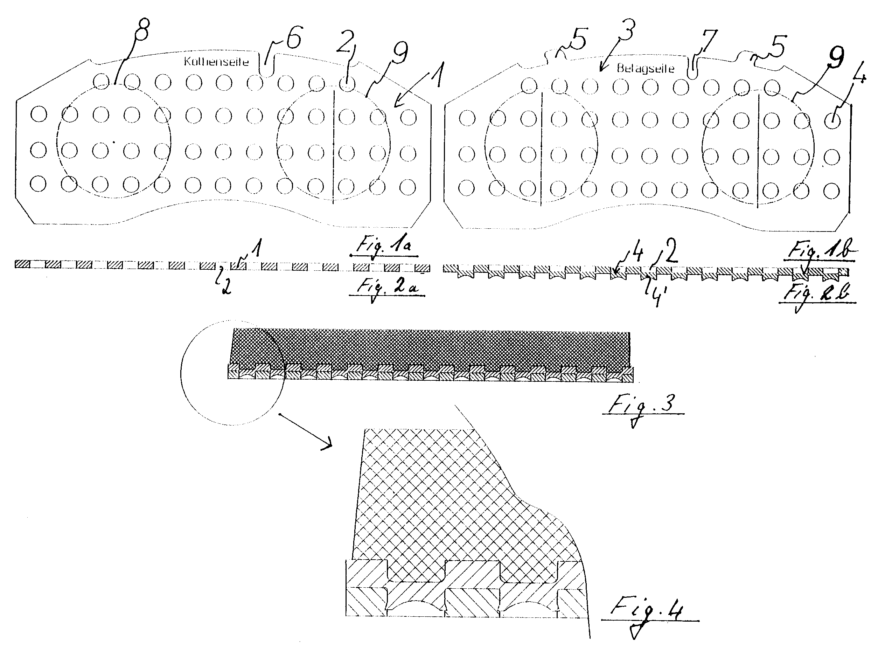

Zunächst seien Fig. 1 und 2 beschrieben. Fig. 1a und 2a zeigen in Draufsicht und im Querschnitt ein (z.B. 5 mm starkes) kolbenseitiges Einzelblech 1, welches mit (vorzugsweise ausgestanzten) Vertiefungen 2 versehen ist. Fig. 1b und 2b veranschaulichen ein entsprechendes belagseitiges Einzelblech 3, welches an den Stellen der Vertiefungen 2 des Bleches 1 mit Ausprägungen 4 versehen ist, derart, daß die Ausprägungen 4 auf der gegenüberliegenden Seite des Bleches 3 scharf nach außen hin auskragende Vorsprünge 4' bilden. Im vorliegenden Fall sind 48 Ausprägungen und Vertiefungen in drei zueinander parallelen Reihen mit je dreizehn und einer weiteren parallelen Reihe mit neun Vertiefungen/Ausprägungen vorgesehen. Die Vertiefungen/Ausprägungen sind jeweils in x- und y-Richtung um den Betrag ihres Durchmessers zueinander versetzt, was beim Zusammenfügen der Belagträgerplatte zu einer Vielzahl von Verbindungsstellen mit hoher Fügewirkung führt.

Zu beachten ist, daß die Außenkonturen der Bleche in einigen Details variieren. So sind z.B. nur an das belagseitige Blech 2 zwei Haltelaschen 5 zur Aufnahme einer (funktions- und sicherheitstechnisch unbedingt vorteilhaften) Belagfeder nach Art des Knorr-Bremse Patentes EP 0 534 987 angeformt. An den Außenkanten der beiden Bleche 1, 3 sind ferner zwei verschieden große, einander ergänzende Aussparungen 6, 7 vorgesehen, welche zur Anbringung eines Belagverschleißdetektors dienen. Schraffiert sind jeweils die Ansatzflächen 8, 9 der Druckstücke einer zweispindligen (pneumatisch zuspannbaren) Nutzfahrzeug-Scheibenbremse nach Art der DE 42 30 005 angedeutet.

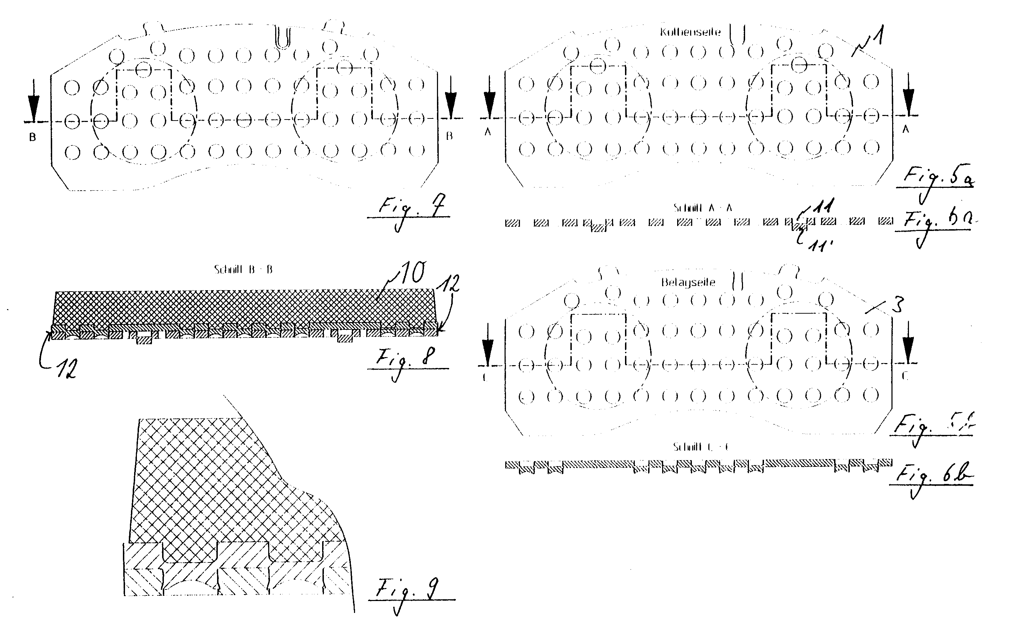

Fig. 3 veranschaulicht in Verbindung mit Fig. 4, wie sich aus den Einzelblechen 1 und 3 auf einfache Weise eine Bremsbacke bilden läßt. Dazu werden die beiden Einzelbleche durch einen kombinierten Stanz- und Nietvorgang fest und unverschieblich miteinander verbunden. Fig. 3 veranschaulicht, daß sich die belagseitig anzuordnenden Ausprägungen 4 in vorteilhafter Weise zur festen und abschersicheren Anbringung des eigentlichen Belagmaterials 10 eignen. Fig. 4 verdeutlicht ferner anhand einer Ausschnittsvergrößerung aus Fig. 3, daß die Vorsprünge 4' (die beim Bilden der Ausprägungen 4 entstehen) beim Zusammenpressen der beiden Bleche 1 und 3 fest in die Vertiefungen eingepreßt werden, und zwar derart, daß Material des Bleches 3 in die Seitenwandungen der Vertiefungen 2 des Bleches 1 gepreßt wird. Dies führt zu einer sicheren Verbindung der beiden Bleche 1 und 3'. Beispielsweise können die Vorsprünge wiederum etwas nach innen gewölbt sein, so daß beim Zusammenpreßen das Randmaterial des Vorsprunges 4' besonders gut in die Randbereiche der Vertiefung 2 eingreift.

Die Ausführungsbeispiele der Fig. 5 und 6 unterscheiden sich vom Ausführungsbeispiel der Fig. 1 und 2 insbesondere dadurch, daß durch das Vorsehen zusätzlicher Ausprägungen 11 im kolbenseitigen Blech 1 Vorsprünge 11' gebildet werden, die sich vorteilhaft zur verdrehsicheren Fixierung der Druckstücke der Scheibenbremse (nicht abgebildet) eignen. Im entsprechenden Druckstück-Anlagebereich 8, 9 werden im belagseitigen Einzelblech 3 keine Ausprägungen gebildet. Kaltverformte Abstützkanten bzw. -flächen 12 erhöhen die Festigkeit zur Aufnahme der Abstützkraft.

Zusammengefaßt läßt sich mit der Erfindung auf einfache Weise ein hochwertiger Bremsbelagträger mit hervorragender Richtwirkung realisieren, der folgende Vorteile miteinander kombiniert:
- maximale Biegefestigkeit;
- minimale Reibung zwischen Belagträgerblech und Bremsträger;
- geringer Verschleiß zwischen Belagträgerblech und Bremsträger;
- kostengünstige Lösung für Zusatzfunktionen;
- maximale Ebenheit auch bei hoher thermischer Belastung;
- kostengünstige Fertigungsmöglichkeiten;
- größte Sicherheit bei Überschreiten von Verschleißmaßen gegen Durchrutschen bzw. Herausfallen der Bremsbacken.

### Bezugszeichenliste

- kolbenseitiges Einzelblech: 1
- Vertiefungen: 2
- belagseitiges Einzelblech: 3
- Ausprägungen: 4
- Vorsprünge: 4'
- Haltelaschen: 5
- Aussparungen: 6, 7
- Ansatzflächen der Druckstücke: 8, 9
- Belag: 10
- Ausprägungen: 11
- Vorsprünge: 11'
- Abstützkanten: 12

## Patentansprüche

1. Bremsbelagträger, insbesondere für Nutzfahrzeug-Scheibenbremsen, der derart aus mehreren - vorzugsweise zwei - Einzelblechen (1, 3) zusammengefügt ist, daß seine Biegesteifigkeit größer ist als die Summe der Einzelsteifigkeiten der Einzelbleche (1, 3).

2. Bremsbelagträger nach Anspruch 1, dadurch gekennzeichnet, daß die Abstützkanten bzw. -flächen (13) der Einzelbleche (1, 3) eine Gesamtfläche bilden, die einen Traganteil aufweist, der höher als der eines entsprechenden Einzelblechträgers ist.

3. Bremsbelagträger nach Anspruch 1 oder 2, dadurch gekennzeichnet, daß die Einzelbleche (1, 3) aus hochfestem Material, insbesondere Stahlblech, bestehen.

4. Bremsbelagträger nach einem der vorstehenden Ansprüche, dadurch gekennzeichnet, daß die Einzelbleche (1, 3) verschiebesicher derart zusammengefügt sind, daß während einer Bremsung keine Relativbewegung zwischen ihnen möglich ist.

5. Bremsbelagträger nach einem der vorstehenden Ansprüche, dadurch gekennzeichnet, daß die Einzelbleche (1, 3) nach Art eines Quasikompaktelementes zusammengefügt sind.

6. Bremsbelagträger nach einem der vorstehenden Ansprüche, dadurch gekennzeichnet, daß eines der Einzelbleche (3) mit Ausprägungen (4) und daß andere Einzelblech (1) mit entsprechend - dimensionierten Vertiefungen (2) zur Aufnahme der Ausprägungen (4) bzw. Vorsprüngen (4') versehen ist.

7. Bremsbelagträger nach einem der vorstehenden Ansprüche, dadurch gekennzeichnet, daß die Einzelbleche (1, 3) durch einen Preßvorgang fest zusammengefügt sind, insbesondere derart, daß die Ausprägungen (4) fest in die entsprechenden Vertiefungen (2) des anderen Einzelbleches (1) eingreifen.

8. Bremsbelagträger nach einem der vorstehenden Ansprüche, dadurch gekennzeichnet, daß der Bremsbelag (5) zur Abschersicherung in die Vertiefungen (2) eingreift und/oder daß die Ausprägungen (4) zur Abschersicherung in den Bremsbelag (5) eingreifen.

9. Bremsbelagträger nach einem der vorstehenden Ansprüche, dadurch gekennzeichnet, daß die Abstützkanten des Belagträgers - insbesondere infolge eines Kaltverfestigungsvorganges - eine höhere Festigkeit aufweisen als das Grundmaterial der Einzelbleche (1, 3).

10. Bremsbelagträger nach einem der vorstehenden Ansprüche, dadurch gekennzeichnet, daß die Einzelbleche (1, 3) derart zusammengefügt sind, daß ihre Walzrichtungen einander kompensieren.

11. Bremsbelagträger nach einem der vorstehenden Ansprüche, dadurch gekennzeichnet, daß die Einzelbleche (1, 3) eine unterschiedliche Außenkontur (Außenradius) aufweisen (insbesondere Haltelaschen 5, Aussparungen 6, 7).

12. Bremsbelagträger nach einem der vorstehenden Ansprüche, dadurch gekennzeichnet, daß die Einzelbleche (1, 3) eine unterschiedliche Flächenkontur, insbesondere unterschiedliche Vertiefungen (2) und Ausprägungen (4) aufweisen.

13. Bremsbelagträger nach einem der vorstehenden Ansprüche, dadurch gekennzeichnet, daß die Materialfestigkeit des durch die Einzelbleche gebildeten Gesamtpaketes größer als 700 N/mm² ist.

14. Bremsbelagträger nach einem der vorstehenden Ansprüche, dadurch gekennzeichnet, daß im kolbenseitigen Trägerblech (1) zusätzliche Ausprägungen (11) und daraus resultierende Vorsprünge (11') vorgesehen sind, die zur verdrehsicheren Anbindung des/der mit entsprechenden Ausnehmungen versehenen Bremsen-Druckstücke(s) dienen.

15. Verfahren zur Herstellung eines Bremsbelagträgers nach einem der vorstehenden Ansprüche, gekennzeichnet durch folgende Schritte:
a) es werden zwei Einzelbleche (1, 3) ausgestanzt, wobei eines der Bleche (3) mit Ausprägungen (4) und das andere Blech (1) mit Vertiefungen (2) versehen wird;
b) die beiden Einzelbleche (1, 3) werden zu einer kompakten Einheit zusammengepreßt, wobei die Ausprägungen (4) mit Nietwirkung unter Eingehen einer Materialverbindung in die Vertiefungen (2) gedrückt werden.
